# EUROPEAN PATENT APPLICATION

(11) **EP 4 527 187 A1**
(43) Date of publication of application: **26.03.2025**
(21) Application number: 23198777.7
(22) Date of filing: 21.09.2023
(51) Int. Cl.: A01G 20/43, E01H 1/04

(54) **SELF-CLEANING TURF TREATMENT DEVICE**

(71) Applicant: MTD Products Inc, Valley City, OH 44280 (US)
(72) Inventor: COLEMAN, John, Slough, SL1 4DX (GB); WILLIAMS, Darren, Slough, SL1 4DX (GB)
(74) Representative: SBD IPAdmin

(57) **Abstract**

A self-cleaning turf treatment device (100). The device has a body (128) having a front side facing a direction of travel of the self-cleaning turf treatment device. A turf comb (104) is mounted to the device body and is arranged to engage a turf canopy and lift debris from the turf canopy. The device has a rotatable brush (102) engageable with the turf comb. The rotatable brush can operate in a debris removal mode in which the rotatable brush rotates in a first direction and propels debris from turf comb in a direction away from the front side and operate in a cleaning mode in which the rotatable brush rotates in a second direction and propels debris lodged in the turf comb in a direction towards the front side.

## Description

### TECHNICAL FIELD

This disclosure relates generally to self-cleaning turf treatment device, and in particular but not exclusively, to a self-cleaning turf cleaner and its use in gathering and removing debris from athletic field turf grass, and other highly maintained natural and artificial turf grass areas.

### BACKGROUND

Maintenance costs for grass sports fields, golf courses, and grass tennis courts are significant, and it is imperative that intensively managed sports turf be maintained correctly. One of the most important factors in attaining the correct environment for sports turf is to retain a clean, debris free surface. Any form of non-intended material that lies in or on top of the turf surface can lead to a weakened grass plant through a lack of sunlight, and the creation of a localized microenvironment underneath the debris that can result in disease inducing conditions.

An example of a typical sports turf environment where surface debris must be removed to maintain good turf sward integrity is immediately after an event, such as a game, match, or tournament, when debris may remain within or on top of the turf surface. A recent trend has been the use of traditional rotary mowers operating as vacuum cleaners used to gather the debris. However, the rotary mower can cause damage to the carefully maintained grass. Rotary blades do not provide a clean cut on sports turf, and rip the plant. This ripping can result in pathogen entry points, leading to disease ingress. The grass plant is stressed, loses colour, and is generally weakened through the action of the ripping caused by the rotary blades. Moreover, this approach does not always work well since the high speed spinning of rotary mower blades, and the resulting air currents and pressures, tend to make the debris more difficult to pick up.

Conventional lawn and turf vacuums generally include powerful engines in order to generate the air movement necessary for debris collection, and are thus quite heavy. The heavy machines cause compaction and damage to the soil structure. Soil structure is important because it determines the ability of the soil to hold and conduct water, nutrients, and air vital for root growth and plant health. Therefore, conventional lawn and turf vacuums are not well-suited for use on highly maintained sports turf.

One known arrangement is shown in EP3717703 which discloses a grass treatment system having a comb which engages the turf canopy and a brush configured to remove debris lifted from the turf canopy by the comb. A problem with this arrangement is that the teeth of the comb can become clogged with dirt and debris especially if the turf is wet. This means that the efficacy of the grass treatment system is greatly reduced, and in some cases, damage the turf. The user must also stop the grass treatment system and manually remove the debris which is unpleasant and time consuming.

### SUMMARY OF THE INVENTION

According to an aspect of the invention there is a self-cleaning turf treatment device. The self-cleaning turf treatment device comprises a device body having a front side facing a direction of travel of the self-cleaning turf treatment device. The self-cleaning turf treatment device further comprises a turf comb mounted to the device body. The turf comb is arranged to engage a turf canopy and lift debris from the turf canopy. The self-cleaning turf treatment device further comprises a rotatable brush engageable with the turf comb. The rotatable brush is configured to operate in a debris removal mode wherein the rotatable brush rotates in a first direction and propels debris from turf comb in a direction away from the front side; and operate in a cleaning mode wherein the rotatable brush rotates in a second direction and propels debris lodged in the turf comb in a direction towards the front side.

The self-cleaning turf treatment device may comprise a motor operatively connected to the rotatable brush for driving the rotatable brush in the first direction and the second direction.

The self-cleaning turf treatment device may comprise a controller configured to selectively operate the motor and the rotatable brush between the debris removal mode and the cleaning mode.

The controller may be configured to operate the rotatable brush in the cleaning mode for a predetermined period of time. The controller may be configured to slow down or stop the motor before switching from the debris removal mode to the cleaning mode and/or vice versa.

The controller may be configured to select either the debris removal mode or the cleaning mode in dependence of a received signal. The turf treatment device may comprise one or more sensors configured to detect a status of the self-cleaning turf treatment device and send a signal comprising status information of the turf treatment device to the controller. The one or more sensors may comprise a tilt sensor mounted on the device body configured to detect an angle of inclination of the turf treatment device with respect to the ground. The controller may be configured to operate the rotatable brush in the cleaning mode when the tilt sensor detects that the turf treatment device is titled with respect to the ground (e.g. when a front portion of the turf treatment device is raised with respect to a rear portion of the device). The controller may be configured to operate the rotatable brush in the cleaning mode when the tilt sensor detects that the turf treatment device has an angle of inclination greater than a predetermined threshold angle of inclination. The one or more sensors may comprise a user input sensor (e.g. a button or switch) configured to detect manual input. The one or more sensors may comprise a location sensor (e.g. a GPS sensor) configured to determine the location of the self-cleaning turf treatment device. The controller may be configured to operate the rotatable brush in the cleaning mode when the self-cleaning turf treatment device is in one or more predetermined areas or outside one or more predetermined areas. The one or more sensors may comprise a brush height sensor configured to detect height adjustment of the rotatable brush with respect to the ground. The controller may be configured to operate the rotatable brush in the cleaning mode when the height of the rotatable brush above the ground is above a predetermined threshold.

The controller may be configured to determine whether the load of the motor is below a predetermined threshold when in the cleaning mode. The controller may be configured to switch the rotatable brush from the cleaning mode to the debris removal mode when the controller determines that the load of the motor is below the predetermined threshold when in the cleaning mode.

The rotational axis of the rotatable brush may be closer to the turf comb when the rotatable brush operates in the cleaning mode. The self-cleaning turf treatment device may comprise a comb adjustment mechanism for adjusting the distance between the turf comb and the rotatable brush (e.g. the distance between the axis of rotation of the rotatable brush and the leading edge of the turf comb). The controller may be configured to control the comb adjustment mechanism such that the turf comb and the rotatable brush are closer together during the cleaning mode (compared to the debris removal mode). The controller may be configured to control the comb adjustment mechanism to decrease the distance between the turf comb and the rotatable brush before the rotatable brush operates in the cleaning mode.

The self-cleaning turf treatment device may comprise a height adjustment mechanism for adjusting the height of the turf comb and the rotatable brush above the ground. The controller may be configured to control the height adjustment mechanism such that the turf comb and the rotatable brush are further away from the ground during the cleaning mode (compared to the debris removal mode). The controller may be configured to control the height adjustment mechanism to move the turf comb and the rotatable brush away from the ground before the rotatable brush operates in the cleaning mode. The turf comb may be positioned underneath the rotatable brush. The device body may comprise a first ground engaging rolling element and a second ground engaging rolling element. The turf comb may be mounted between the first ground engaging rolling element and the second ground engaging rolling element.

The self-cleaning turf treatment device may comprise a container for receiving debris propelled from the turf comb in a direction away from the front side in the debris removal mode.

The turf treatment device may be a pedestrian lawn care apparatus, a riding lawn care apparatus, a robotic lawn care apparatus, or an accessory mountable to a lawn care apparatus.

### BRIEF DESCRIPTION OF THE DRAWINGS

Examples will now be described with reference to the accompanying drawings, in which:
Figure 1 shows a cross-sectional side view of a self-cleaning turf treatment device according to an example;
Figure 2 shows a close up cross-sectional side view of a self-cleaning turf treatment device according to an example;
Figure 3 shows an underneath plan view of part of a self-cleaning turf treatment device according to an example;
Figure 4 shows a schematic view of a self-cleaning turf treatment device according to an example;
Figure 5 shows a flow diagram of a method using a self-cleaning turf treatment device according to an example.

### DETAILED DESCRIPTION

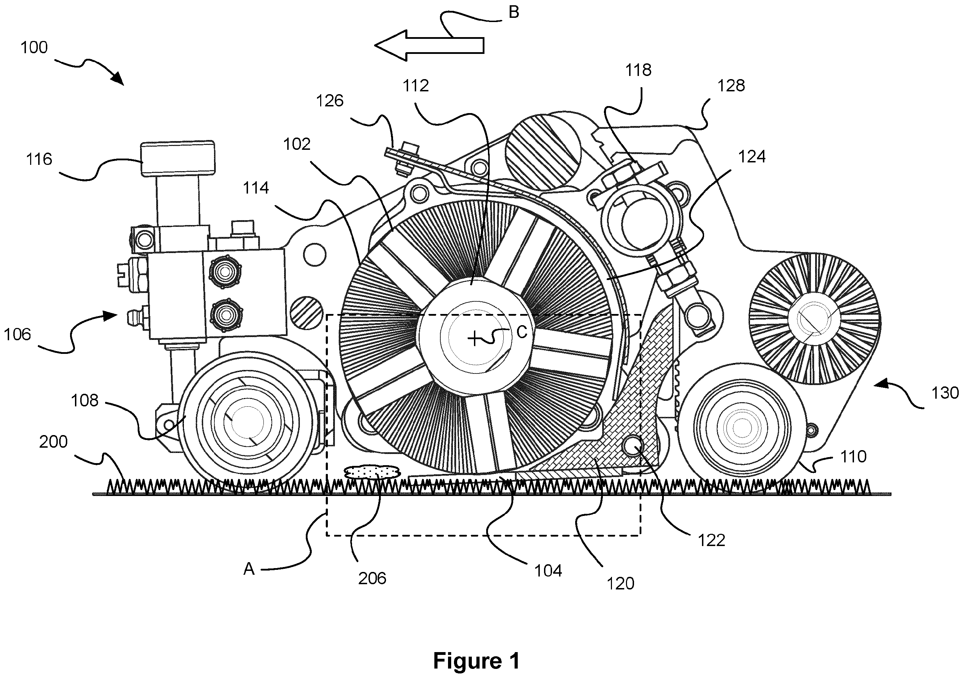

Figure 1 shows a cross-sectional side view of a self-cleaning turf treatment device 100. Examples of self-cleaning turf treatment devices 100 are disclosed. In some examples, the self-cleaning turf treatment device 100 is a pedestrian turf treatment device 100 such as a reel mower, a ride-on turf treatment device or vehicle 100 such as a ride-on mower, a robotic turf treatment device 100 such as a robotic lawn mower, or an accessory for any of these.

In the following description numerous specific details are set forth to provide a thorough understanding of the examples. One skilled in the relevant art will recognize, however, that the techniques described herein can be practiced without one or more of the specific details, or with other methods, components, materials, etc. In other instances, well-known structures, materials, or operations are not shown or described in detail to avoid obscuring certain aspects.

Reference throughout this specification to "one example", "an example", or "some examples" means that a particular feature, structure, or characteristic described in connection with the example is included in at least one example of the disclosure. Thus, the appearances of the phrases "in one example", "in an example", or "in some examples", in various places throughout this specification are not necessarily all referring to the same example. Furthermore, the particular features, structures, or characteristics may be combined in any suitable manner in one or more examples.

For purposes of description herein, the terms "top", "bottom", "upper", "lower", "upward", "downward", "front", "rear" and derivatives thereof, shall relate to the turf treatment device as oriented and shown, for example, in Figure 1.

For purposes of description herein, the terms "turf grass" "grass", "artificial turf", "grass plants", "grass blades" and the like, refer to numerous types and varieties of natural and artificial grasses such as those used on athletic fields and lawns, for example, on football pitches, rugby pitches, cricket pitches, tennis courts, golf courses, baseball fields, recreational sites, residential and commercial lawns, and any other similar grass covered areas.

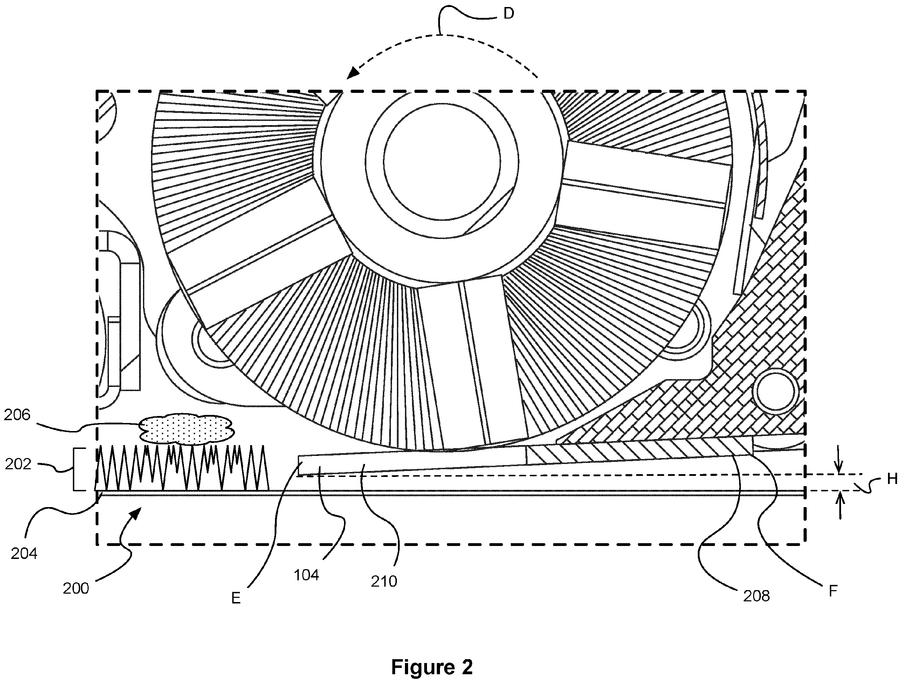

Hereinafter the term "turf" shall be used to refer to any lawn type surface whether comprising natural turf or artificial turf surface. The turf 200 is shown in Figures 1 and 2.

Turning to Figure 2, the structure of turf 200 will be briefly discussed. Figure 2 shows a close-up side cross sectional view of the self-cleaning turf treatment device 100. The view as shown in Figure 2 is a magnified area A as shown in the dotted box in Figure 1. Turf 200 comprises a foliage formed from the leaves and stalks (e.g. grass plants) from the turf 200 structure. The turf 200 structure may be an organic, natural structure or alternatively an artificial structure. This means that the foliage of the turf 200 creates a turf canopy 202 of leaves, stalks, and other parts of the turf 200 raised above the surface of the ground 204. Accordingly, this means debris 206 may be positioned on top of the turf canopy 202. Additionally or alternatively, the debris 206 may be positioned within the turf canopy 202.

For purposes of description herein, the term "debris" 206 refers to any of grass clippings, leaves, soil, organic material, artificial turf infill, paper, litter, rubbish, and most any other pieces of scattered waste or remains. Debris 206 also refers to organic soil structures created by pests, or other animals e.g. wormcasts or molehills. Debris 206 may also refer to organic fouling created by pests, birds or other animals e.g. guano or faeces.

The self-cleaning turf treatment device 100 as shown in Figure 1 provides turf 200 cleaning and debris 206 removal while preventing or minimizing harm to the grass plants or turf 200 structure. The self-cleaning turf treatment device 100 can remove surface debris 206 on the turf 200 without unduly damaging the grass plants e.g. when the self-cleaning turf treatment device 100 is used with turf 200 comprising grass plants.

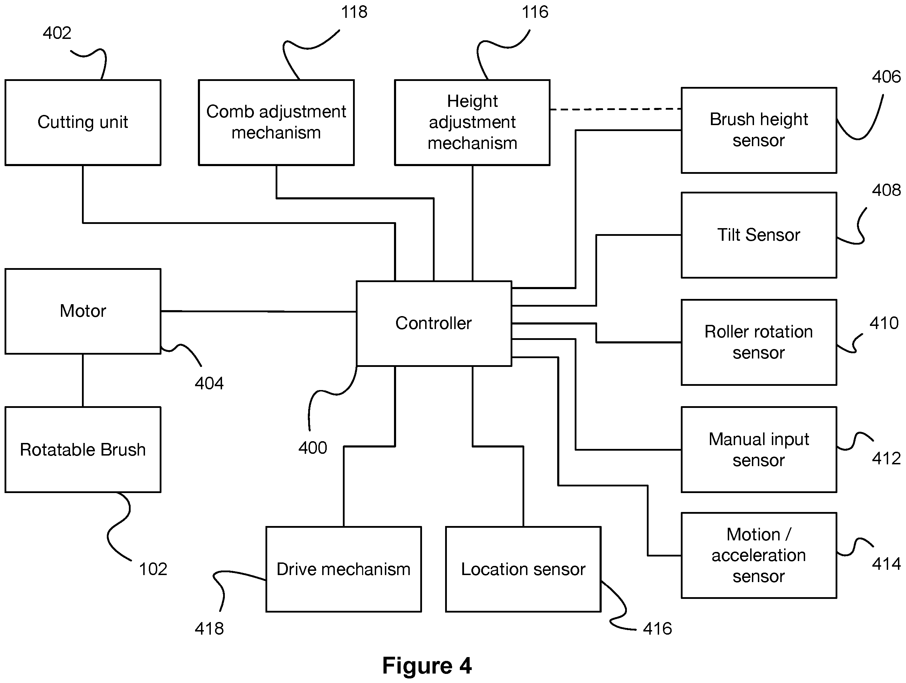

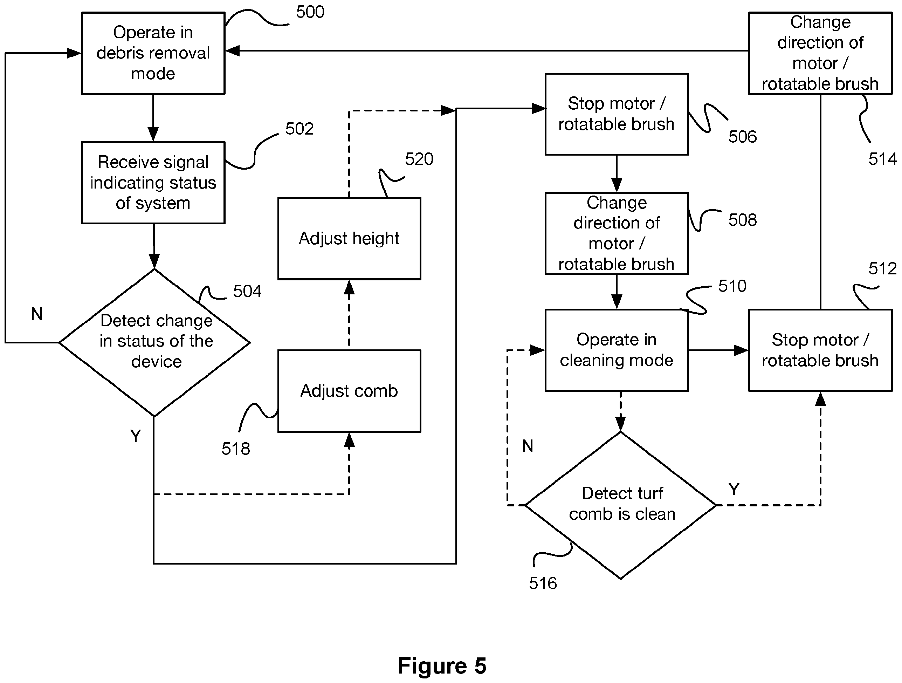

The self-cleaning turf treatment device 100 is configured to operate in a debris removal mode. In the debris removal mode, the self-cleaning turf treatment device 100 gently lifts debris 206 that is present on and around the turf canopy 202 and propels the debris 206 along to a collection container (not shown). In some examples, the collection chamber is a hopper, bin, or other suitable container for receiving the debris 206 lifted and removed from the turf canopy 202. At the same time, the self-cleaning turf treatment device 100 is configured to operate in a self-cleaning mode to ensure that the self-cleaning turf treatment device 100 remains operational. The self-cleaning mode will be discussed in more detail below with reference to Figures 4 and 5.

The self-cleaning turf treatment device 100 is lightweight when compared to, for example, traditional turf vacuum equipment which is generally heavy and causes soil compaction impeding root growth and decreasing the grass plant's ability to take up nutrients and water. The self-cleaning turf treatment device 100 is lightweight and energy efficient and minimizes compaction of the underlying soil.

Turning back to Figure 1, the self-cleaning turf treatment device 100 will be discussed in more detail.

In an example, the self-cleaning turf treatment device 100 is formed as a cassette or interchangeable cartridge for attachment to a reel mower, or similar machine. The self-cleaning turf treatment device 100 can be mounted, for example, to the frame of the reel mower (not shown). Alternatively, the self-cleaning turf treatment device 100 may comprises its own device body 128 which is mountable to the frame of the reel mower. In this way, the self-cleaning turf treatment device 100 can be a self-cleaning turf treatment device 100 such as a mower or can be an accessory for a mower.

As shown in Figure 1, the self-cleaning turf treatment device 100 comprises a device body 128. The device body 128 comprises a housing for shielding components of the self-cleaning turf treatment device 100. The device body 128 comprises one or more structural elements such as a frame (not shown) for mounting components of the self-cleaning turf treatment device 100 to the device body 128.

The self-cleaning turf treatment device 100 includes a rotatable brush 102 and a turf comb 104 which cooperates with the rotatable brush 102 to lift, gather and remove debris 206 on and around the surface of the turf canopy 202. The rotatable brush 102 and the turf comb 104 are mounted to the device body 128 as discussed in more detail below.

When the self-cleaning turf treatment device 100 is operating in the debris removal mode, the rotatable brush 102 is configured to rotate in a first direction. The rotatable brush 102 is rotatable about a substantially horizontal, transverse axis C (as indicated in Figure 1). The rotatable brush 102 comprises a brush core 112 and bristles 114. The rotatable brush 102 and a turf comb 104 are oriented transversely to the direction of travel of the self-cleaning turf treatment device 100.

As shown in Figure 1, the self-cleaning turf treatment device 100 can include front and rear rolling elements 108, 110, (e.g. wheels or rollers) respectively, configured to engage the surface of the ground 204 for supporting the self-cleaning turf treatment device 100, and for moving the self-cleaning turf treatment device 100 over the ground. The front and rear rolling elements 108, 110, (e.g. wheels or rollers) as shown in Figure 1 are mounted to the device body 128.

In some examples, the front and rear rolling elements 108, 110, (e.g. wheels or rollers) are optional. In some examples, the self-cleaning turf treatment device 100 is an accessory mounted to a turf treatment machine e.g. a ride-on mower. For example, the self-cleaning turf treatment device 100 is mounted on the rear of a ride-on mower. In this case, the self-cleaning turf treatment device 100 does not comprise front and rear rolling elements 108, 110 and is suspended over the turf 200 whilst being mounted to the mower.

Turning back to Figure 1, the front rolling element 108 is disposed towards a front portion 106 of the self-cleaning turf treatment device 100 relative to a direction B of travel of the self-cleaning turf treatment device 100. The direction of travel of the self-cleaning turf treatment device 100 is indicated by arrow B in Figure 1. The rear rolling element 110 is disposed towards a rear portion 130 of the self-cleaning turf treatment device 100 relative to the direction B of travel of the self-cleaning turf treatment device 100. The rotatable brush 102 and turf comb 104 are positioned between the front rolling element 108 and the rear rolling element 110.

The front rolling element 108 and the rear rolling element 110 are configured to be in contact with the surface of the ground 204 to assist in smooth movement of the self-cleaning turf treatment device 100 over the surface of the ground 204, and to maintain a height H of the turf comb 104 relative to the surface of the ground 204.

A height adjustment mechanism 116, and a comb adjustment mechanism 118 are operable to position the turf comb 104 at the height H above the turf 200. The user may adjust the height H depending for example, on what type of debris 206 is to be removed, and/or to control the amount of turf canopy 202 that will be contacted and lifted by the turf comb 104.

In some examples, the height adjustment mechanism 116, and the comb adjustment mechanism 118 are manually adjustable by the user e.g. by a screw thread (not shown). In some other examples, the height adjustment mechanism 116, and the comb adjustment mechanism 118 comprise an electromechanical actuator e.g. servo or motor, pneumatic actuator, or hydraulic actuator configured to adjust the position and height of the turf comb 104 automatically. For example, a controller 400 (best shown in Figure 4) is configured to control one or more the actuators (not shown). The controller 400 will be discussed in more detail below in reference to Figures 4 and 5.

In an example, the comb adjustment mechanism 118 is operably connected to a comb support 120 and pivot 122. Collected debris 206 is propelled by the rotatable brush 102, and by air currents produced by the rotatable brush 102, along the chute 124 and guided past the airflow deflection component 126 to an optional grass catcher or collection container (not shown).

In an example, the self-cleaning turf treatment device 100 optionally comprises a reel mower cutting unit (not shown) having a rotatable brush 102 installed in place of a conventional rotating cutting reel (not shown), and a turf comb 104 installed in place of a bedknife (not shown).

In some other examples, the self-cleaning turf treatment device 100 is a reel mower (not shown). The reel mower includes a frame on which a power source is supported, and a drive mechanism that propels the reel mower frame across the ground, the drive mechanism being powered by the power source. The reel mowers also includes a ground engaging reel cutting unit mounted to the reel mower frame. The reel cutting unit 402 includes a rotating cutting reel having helical blades, and a bedknife which cooperates with the cutting reel to cut the grass, and front and rear ground engaging wheels or rollers for supporting the reel cutting unit, and for moving the cutting unit over the ground.

In other examples, the self-cleaning turf treatment device 100 comprises optionally a reel mower cutting unit 402 (schematically shown in Figure 4) having a rotatable cutting reel which sweeps standing grass against a bedknife (not shown) to cut the grass, and a turf comb 104 positioned near the bedknife (not shown) such that that the turf comb 104 contacts the turf 200 before it is cut. The cutting unit 402 as shown in Figure 4 is optional and the self-cleaning turf treatment device 100 may not be provided with the cutting unit 402. Indeed, the example as shown in Figure 1 does not comprises a cutting unit 402.

Turning back to Figure 2, the self-cleaning turf treatment device 100 will be described in more detail. In an example, the self-cleaning turf treatment device 100 gathers debris 206 by positioning the turf comb 104 in front and near to the base of the turf canopy 202 such that it collects and directs debris 206 in to the path of the rotatable brush 102.

In an example, the turf comb 104 is positioned to contact a top portion of the turf grass surface equal to or less than about one third a length of the turf canopy 202. The action of the turf comb 104 has little or no detrimental effect on the grass plants. The rotatable brush 102 does not come in to contact with the grass plant, and so the rotatable brush 102 also does not adversely affect the health of the grass.

In an example, the self-cleaning turf treatment device 100 comprises a cassette or interchangeable cartridge. A front rolling element 108 is disposed towards the front of the self-cleaning turf treatment device 100 relative to the direction of travel of the self-cleaning turf treatment device 100. The rear rolling element 110 is disposed towards the rear portion 130 of the self-cleaning turf treatment device 100 relative to the direction of travel of the self-cleaning turf treatment device 100. The rotatable brush 102 and turf comb 104 are positioned between the front rolling element 108 and the rear rolling element 110.

The rotatable brush 102 comprises a substantially cylindrical brush core 112 extending along the longitudinal axis C. A plurality of radially extending bristles 114 are arranged in rows extending longitudinally along the surface of the cylindrical brush core 112. In an example, the bristles 114 are arranged in a generally helical pattern on the brush core 112. For example, the bristles 114 can be arranged in one or more columns disposed in one or more spiral or helical paths about at least a portion of the longitudinal axis of the brush core 112.

In an example, the bristles 114 are arranged in the same or a similar helical pattern as reel mower cutting blades. In other examples, the bristles 114 can be arranged in a plurality of columns or rows and disposed in substantially straight lines, or in a zig-zag pattern, along the brush core 112.

The brush core 112 can be a solid or hollow, substantially cylindrical structure. In an example, the brush core 112 includes openings (not shown) to optimize airflow in and around the rotatable brush 102, and to enhance the performance of the self-cleaning turf treatment device 100.

As the self-cleaning turf treatment device 100 is moved across the turf 200, the turf comb 104 catches hold of the debris in its path and presents it to the tips of the bristles 114 of the rotatable brush 102. The tips of the bristles 114 of the rotatable brush 102 contact the surface of the turf comb 104 and sweep the debris 206 onward though the chute 124, and to a grass catcher (not shown).

During operation of the self-cleaning turf treatment device 100 in the debris removal mode, the rotatable brush 102 is configured to rotate in a first direction. As shown in Figure 2, the first direction of the rotatable brush 102 is an anticlockwise direction D as shown by the dotted arrow D. As the rotatable brush 102 rotates in the first direction, the rotatable brush 102 causes the debris 206 to be propelled from turf comb 104 in a direction away from the front portion 106 e.g. a front side of the device body 128.

The rotatable brush 102 can move at a relatively low rotational speed, for example between about 800 revolutions per minute (rpm) and 1800 rpm. Increasing the rotational speed of the rotatable brush 102 can improve fine debris 206 pick up performance. For example, the rotatable brush 102 can be operated at a relatively higher rotational speed to gather fine grass clippings, and at a relatively slower rotational speed to collect larger debris 206, e.g. leaves, and paper litter.

Because the rotatable brush 102 rotates at a relatively slower speed, compared to the speed of a rotary mower, and because the rotatable brush 102 is configured to contact the turf comb 104 rather than the turf canopy 202, the rotatable brush 102 gently lifts the debris 206 and pushes it along to the container e.g. a grass catcher or bagger (not shown), thereby preventing or minimizing damage to the grass blades.

In some examples, the outside diameter of the rotatable brush 102 measured from the tip of the bristles 114 to the tips of diametrically opposite bristles 114, can optionally be from about 120 mm to 200 mm.

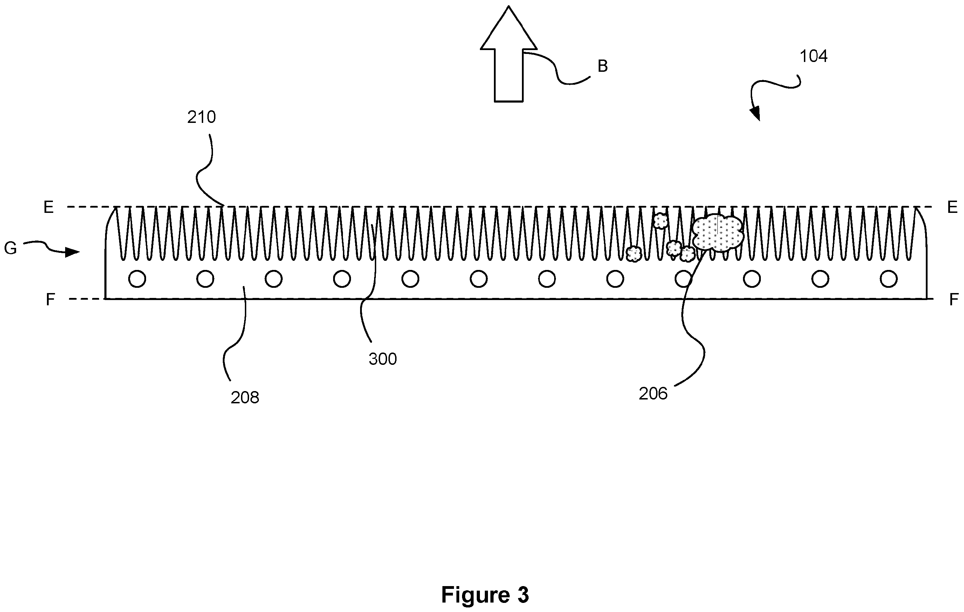

In some examples, a turf comb 104 is mounted to the device body wherein the turf comb 104 comprises a comb body 208 having a plurality of comb teeth 210 forming a leading comb edge E facing the direction B of travel of the self-cleaning turf treatment device 100. The turf comb 104 is shown in Figures 1, 2 and 3. Figure 3 shows an underneath plan view of the turf comb 104.

The plurality of comb teeth 210 are arranged to engage the turf canopy 202. The leading comb edge E comprises the ends of the plurality of comb teeth 210 facing the direction B of travel of the self-cleaning turf treatment device 100. In this way, the leading comb edge E is the edge of the turf comb 104 which engages the turf canopy 202 when the turf treatment device travels in the direction B. In some examples, the leading comb edge E is substantially parallel to the longitudinal axis C of the rotatable brush 102.

The comb body 208 comprises an elongated spine and the plurality of teeth 210 extending outwardly from a trailing edge F of the turf comb 104 along the elongated spine. The trailing edge F of the turf comb 104 is a part of the turf comb 104 which is closest to the rear portion 130 of the self-cleaning turf treatment device 100.

In an example, the turf comb 104 is generally planar extending in a plane G comprising the longitudinal axis of the leading comb edge E and the longitudinal axis of the trailing comb edge F as shown in Figure 3. The plane G of the turf comb 104 is substantially parallel to the longitudinal axis C of the rotatable brush 102.

In some examples the plane G of the turf comb 104 can be angled with respect to the surface of the ground 204 with the comb adjustment mechanism 118. By angling the turf comb 104 with respect to the surface of the ground 204, the rate at which the debris 206 is lifted from turf canopy 202 can be adjusted. In some other examples, the plane G of the turf comb 104 can be parallel with respect to the surface of the ground 204 or any other require angle of the turf comb 104 with respect to the surface of the ground 204.

The plurality of comb teeth 210 of the turf comb 104 are optionally pointed teeth and extending in a direction transverse to the longitudinal axis C of the rotatable brush 102. In use, the turf comb 104 is moved in the direction B of travel with the leading comb edge E of the turf comb 104 configured to contact the turf canopy 202 ahead of the comb body 208.

Each adjacent comb tooth 210 is separated by a gap 300. In an example, the dimensions of the plurality of gaps 300 between the plurality of comb teeth 210 comprise the complement to the dimensions of the comb teeth 210. That is, the separation between the plurality of comb teeth 210 and the and the plurality of gaps 300 is the same or substantially the same.

In an example, the plurality of comb teeth 210 can include a generally elongated sawtooth profile as shown in Figure 3. In other examples, the comb teeth 210 can be substantially straight, and the gaps 300 between the plurality of comb teeth 210 are substantially the same width as the width of the comb teeth 210. The shape and width of the comb teeth 210, and the width of the gaps 300, are subject to a wide range of dimensions depending on the nature of the debris 206 to be removed from the turf canopy 202, and the type of turf grass being treated. The length of the turf comb 104 can be comparable to the length of the rotatable brush 102.

In normal operation, when the self-cleaning turf treatment device 100 is operating in the debris removal mode, the turf comb 104 can be moved in the direction of travel B with the plurality of comb teeth 210 contacting the turf canopy 202 ahead of the trailing comb edge F. As the self-cleaning turf treatment device 100 is propelled and moves forwardly, the plurality of comb teeth 210 engage debris 206 on and around the surface of the turf canopy 202 and lift the debris 206. This positions the debris 206 to be contacted by the rotatable brush 102, and moved along a chute 124 or exit path, for example, via air deflection component 126, to a collection container (not shown).

Optionally, air currents produced by the rotating brush 102, may also propel the debris 206 along through the chute 124. In other examples, the plurality of comb teeth 210 additionally engage and lift the blades of turf canopy 202. This positions the blades of turf canopy 202 to be cut at a uniform length by a cutting reel (not shown).

The turf comb 104 lifts and moves debris 206 material in to the path of the rotatable brush 102, therefore, the rotatable brush 102 is effective in removing the debris 206 without harming the grass plants. Since the rotatable brush 102 does not directly contact the plant but rather the turf comb 104, the bristles 114 of the rotatable brush 102 do not contact and bruise the plant and avoid plant stress and injury.

Reference will now be made to Figure 1 again. The height adjustment mechanism 116 and the comb adjustment mechanism 118 can be used to position the turf comb 104 at a prescribed height above the turf canopy 202. In addition, the height adjustment mechanism 116 and the comb adjustment mechanism 118 are configured to position the turf comb 104 at a prescribed distance from the rotatable brush 102 e.g. the distance of the axis of rotation C of the rotatable brush 102 from the leading comb edge E. The position of the leading comb edge E with respect to the rotation axis C of the rotatable brush 102 depend on one or more parameters. The parameters my depend on what type of debris 206 is to be removed, and/or to control the amount of grass that will be lifted by the turf comb 104.

For example, when the majority of the debris 206 includes grass clippings, the height adjustment mechanism 116 and the comb adjustment mechanism 118 can be used to adjust the position of the turf comb 104 relatively closer to the turf canopy 202, and/or closer to the rotatable brush 102.

Alternatively, when the majority of the debris 206 includes leaves or litter, the turf comb 104 can be positioned relatively further from the turf canopy 202, and/or further from the rotatable brush 102. In some applications, the turf comb 104 can be adjusted to be closer to the turf canopy 202 and further from the rotatable brush 102, and vice versa.

In an example, an additional adjustment mechanism (not shown) is provided for moving the turf comb 104 towards or away from the rotatable brush 102, thereby calibrating an aperture size between the rotatable brush 102 and turf comb 104, and dependent on the size of the debris 206 that is to be removed. In some examples the additional adjustment mechanism is incorporated into the comb adjustment mechanism 118 by providing one or more further actuators for moving the turf comb 104 in multiple degrees of freedom. In some examples, the comb adjustment mechanism 118 comprises any suitable number of actuators for modifying the position and orientation with respect to the device body 128.

For example, typical rubber crumb infill used on artificial turf is less compliant than organic material, and a larger aperture can be used to collect the crumb infill material effectively. In other examples, the aperture between the turf comb 104 and rotatable brush 102 can be adjusted for optimum debris flow and/or air flow, and to compensate for rotatable brush 102 wear. In an example, the aperture between the comb and the outer edge of the brush bristles 114 can be adjusted to be between about 0 mm to 50 mm.

A problem with the self-cleaning turf treatment device 100 in normal operation is that the debris 206 can comprise sticky organic matter for example wormcasts, soil, guano, animal faeces or any other organic residual matter. This means that the debris 206 can become lodged in the gaps 300 between the plurality of comb teeth 210. Over extended use of the self-cleaning turf treatment device 100 in the debris removal mode, the turf comb 104 can become clogged. This reduces the efficacy of the self-cleaning turf treatment device 100 and under certain circumstances may prevent the self-cleaning turf treatment device 100 from cleaning the turf canopy 202 at all.

With known grass treatment systems, this means that the user must stop the grass treatment systems to perform manual maintenance and cleaning. If the turf canopy 202 is wet or particularly soiled this can mean that the user is stopping to unclog the turf comb 104 frequently. This is time consuming and unpleasant for the user.

Advantageously, the self-cleaning turf treatment device 100 comprises a cleaning mode which means that lodged debris 206 in the turf comb 104 can be removed by the self-cleaning turf treatment device 100 itself. Accordingly the self-cleaning turf treatment device 100 is able to self-clean without the user performing periodic manual cleaning operations. This means user of the self-cleaning turf treatment device 100 is more efficient for the user.

When the self-cleaning turf treatment device 100 operates in the cleaning mode, the rotatable brush 102 is configured to rotate in a second direction. The rotatable brush 102 is configured to reverse the rotational direction and rotate in a clockwise direction, opposite to the direction D as shown in Figure 2. In the cleaning mode the rotatable brush 102 rotates in a second direction and is configured to propel the debris 206 lodged in the turf comb 104 in a direction towards the front portion 106 e.g. a front side of the device body 128.

Accordingly, the rotatable brush 102 is configured to rotate in the second direction and propel the debris 206 (e.g. as shown in Figure 3) lodged in the turf comb 104 from comb body 208 towards the leading comb edge E and the front 106 of the device body 128. Since the rotatable brush 102 has reversed direction, the debris 206 can be dislodged because the comb body 208 is not restricting the movement of the debris 206. The rotatable brush 102 urges the debris 206 on the turf comb 104 in a direction towards the front portion 106 of the self-cleaning turf treatment device 100. In some cases, this means that the debris 206 is flung back onto the turf canopy 202 or the surface of the ground 204.

In this way, the user may only want to operate the cleaning mode in certain areas. For example, at the side of a sports field or a path and not in the middle of the sports field. This ensures that the debris 206 dislodged from the turf comb 104 is deposited in an area of turf 200 that is not important or immaterial whether the turf canopy 202 receives an increase in debris 206.

Turning to Figures 4 and 5, the operation of the self-cleaning turf treatment device 100 will be discussed in more detail. Figure 4 shows a schematic representation of the self-cleaning turf treatment device 100 and Figure 5 show a flow diagram of the method of operation of the self-cleaning turf treatment device 100.

In some examples, the self-cleaning turf treatment device 100 comprises a controller 400. The controller 400 is configured to control one or more mechanisms of the self-cleaning turf treatment device 100. As shown in Figure 4, the controller 400 is connected to a motor 404 which is operatively connected to the rotatable brush 102. The motor 404 and the controller 400 are connected to a power source e.g. a battery (not shown). The power source is not shown for the purposes of clarity.

As with the other components of the self-cleaning turf treatment device 100, the motor 404 is mounted to the device body 128. The controller 400 is configured to send control signals to the motor 404 to control the speed and direction of the motor 404. In some examples, the motor 404 comprises a drive shaft (not shown) on which the rotatable brush 102 is mounted. In other examples, the rotatable brush 102 is connected to the motor 404 via a gearbox (not shown) or another drive mechanism such as a belt drive, a chain drive, a wire drive or any other suitable mechanism for operatively connecting the drive shaft of the motor 404 to the rotatable brush 102.

In some other examples, the motor 404 can be replaced with an engine (not shown) instead for driving the rotatable brush 102. In this case, the engine is operatively coupled to the rotatable brush 102 via a gearbox (not shown). The gearbox comprises multiple gears which a configured to drive the rotatable brush 102 in opposite directions. In some examples, the controller 400 is configured to control the gearbox in order to select the direction of the rotatable brush 102.

Turning back to Figures 4 and 5, the controller 400 is configured to selectively control the motor 404 and the rotatable brush 102 operating in the debris removal mode and the cleaning mode. Step 500 in Figure 500 shows the controller 400 operating the motor 404 and the rotatable brush 102 in the debris removal mode. Likewise step 510 shows the controller 400 operating the motor 404 and the rotatable brush 102 in the cleaning mode. The operation of the controller 400 will now be discussed in more detail.

The controller 400 is optionally connected to one or more sensors 406, 408, 410, 412, 414, 416 mounted on the self-cleaning turf treatment device 100. The one or more sensors 406, 408, 410, 412, 414, 416 are configured to detect one or more conditions of the self-cleaning turf treatment device 100 and the environment of the self-cleaning turf treatment device 100. The controller 400 is configured to modify the operation of the self-cleaning turf treatment device 100 in response to one or more received signals from the one or more sensors 406, 408, 410, 412, 414, 416. The one or more sensors 406, 408, 410, 412, 414, 416 can be mounted to the device body 128 or a component or the self-cleaning turf treatment device 100 as required.

As shown in Figure 4, the controller 400 is connected to a tilt sensor 408. The tilt sensor 408 in some examples is mounted to the device body 128 and is configured to detect a tilting of the self-cleaning turf treatment device 100 with respect to the surface of the ground 204. The tilt sensor 408 is configured to detect a rotation of the self-cleaning turf treatment device 100 about an axis parallel to the rotation axis C of the rotatable brush 102. In other words, the tilt sensor 408 is configured to detect when the front portion 106 is raised with respect to the rear portion 130. For example this movement would represent the user lifting the front rolling element 108 in order to turn the self-cleaning turf treatment device 100 around. When the tilt sensor 408 detects that the front portion 106 is raised, the tilt sensor 408 is configured to send a signal to the controller 400. In other examples, the tilt sensor 408 is configured to detect the tilting of the self-cleaning turf treatment device 100 in a plurality of directions.

The controller 400 receives the sensor signal from the tilt sensor 408 as shown in step 502 in Figure 5. The controller 400 determines from the sensor signal that the user has lifted the front rolling element 108. Accordingly the controller 400 determines that a status of the self-cleaning turf treatment device 100 has changed in step 504. If the controller 400 determines that there is no change in the status of the self-cleaning turf treatment device 100, then the controller 400 returns to the start step 500 and operates the rotatable brush 102 and the motor 404 in the debris removal mode. The controller 400 then continues to monitor received sensor signals in step 502.

Once the controller 400 determines that a status of the self-cleaning turf treatment device 100 has changed, the controller 400 selectively controls the motor 404 and the rotatable brush 102 to change from the debris removal mode to the cleaning mode.

In some examples, the controller 400 issues control instructions to the motor 404 to stop the motor 404 and the rotating brush 102 rotating in a first direction (e.g. anticlockwise as shown in Figure 2) as shown in step 506. This allows the motor 404 to slow down before the direction of the motor 404 is reversed. The motor 404 and the rotating brush 102 will have a rotational inertia if the rotating brush 102 is operating in the debris removal mode e.g. as shown in step 500. Therefore the controller 400 allows the motor 404 and the rotatable brush 102 to slow down or stop before reversing the direction of the motor 404. This avoids damage to the motor 404 when switching between the debris removal mode to the cleaning mode.

In some examples, step 506 can be optional if the controller 400 determines that the motor 404 and rotational brush 102 are already stationary. This may occur if the self-cleaning turf treatment device 100 performs a self-clean using the cleaning mode on e.g. start-up of the self-cleaning turf treatment device 100. The controller 400 in some examples determines the voltage across the motor 404 and the current through the motor 404 in order to determine whether the motor 404 is under load and / or operational.

Once the controller 400 determines that the motor 404 has stopped, the controller 400 issues a control signal to change the direction of the motor 404 and the rotatable brush 102 as shown in step 508. The motor 404 and the rotatable brush 102 then rotate in a second direction e.g. in a clockwise direction as shown in Figure 2.

The controller 400 then allows the rotatable brush 102 and the motor 404 to rotate in the second direction in order to perform the self-clean operation. The rotatable brush 102 operates in the cleaning mode as shown in step 510.

The controller 400 in some examples is configured to let the motor 404 and the rotatable brush 102 operate in cleaning mode in step 510 for a predetermined period of time. For example, the controller 400 controls the motor 404 to rotate in the second direction for e.g. 4 seconds. The period of time of operation in the cleaning mode can be any suitable length of time e.g. 5 seconds, 10 seconds, 15 seconds etc.

The controller 400 then sends a control signal to the motor 404 to slow down and stop the motor 404 as shown in step 512. This is the same as step 506 discussed above. Similarly the controller 400 issues another control signal to the motor 404 to reverse the direction of the motor 404 back to the first direction in step 514. Step 514 is the same as step 508. The controller 400 then continues to operate the motor 404 and the rotatable brush 102 in the debris removal mode in step 500 again.

In some examples, the controller 400 optionally receives one or more signals from sensors to determine whether the turf comb 104 is clean as shown in step 516. For example, the controller 400 may receive voltage and current signals from the motor 404 to determine whether the motor 404 is under load when operating in the cleaning mode in step 510.

When the motor 404 is under load in the cleaning mode, this may indicate that the debris 206 is still stuck in the turf comb 104 and the rotating brush 102 is exerting a force against the lodged debris 206 in the turf comb 104. The controller 400 then continues operating the motor 404 and the rotatable brush 102 in the cleaning mode. Once the controller 400 determines that the motor 404 is not under load or below a predetermined load threshold in the cleaning mode, the controller 400 this may indicate that there is no debris 206 lodged in the turf comb 104. The controller 400 may determine that there is a threshold motor load if the rotatable brush 102 always contacts the turf comb 102, even if there is no debris 206 stuck in the turf comb 102. Accordingly, the controller 400 stops the motor 404 and rotatable brush 102 in step 512. The controller 400 then issues control signals to return to operating the motor 404 and the rotatable brush 102 in the debris removal mode in step 500.

In some examples, once the controller 400 determines that there is a change in the status of the device in step 504, the controller 400 optionally issues control instructions to adjust the position of the turf comb 104. In step 518 the controller 400 optionally issues a control instruction to the actuators of the comb adjustment mechanism 118 to move the turf comb 104. In some examples, the actuators of the comb adjustment mechanism 118 move the turf comb 104 closer to the rotatable brush 102. This means that the rotatable brush 102 can exert more force on the turf comb 104 and better remove the lodged debris 206.

In step 520 the controller 400 optionally issues a control instruction to the actuators of the height adjustment mechanism 116 to move the height of the turf comb 104 above the surface of the ground 204. In some examples, the actuators of the height adjustment mechanism 116 move the turf comb 104 and the rotatable brush 102 away from the surface of the ground 204. This means that the rotatable brush 102 and the turf comb 104 are remote from the turf canopy 202 when the motor 404 and the rotatable brush 102 during the cleaning mode. Accordingly, the turf canopy 202 is not damaged or even touched by the rotatable brush 102 during the cleaning mode.

In some examples, the self-cleaning turf treatment device 100 receives status information from one or more other sensors 406, 408, 410, 412, 414, 416 in step 502. In some examples, the controller 400 receives a signal additionally or alternatively to the tilt sensor 408.

In some examples, the self-cleaning turf treatment device 100 comprises a manual input sensor 412. The manual input sensor 412 can be mounted on a handle (not shown) or a control panel (not shown) of the self-cleaning turf treatment device 100. The manual input sensor 412 can be a button or switch which can be manually actuated by the user. The user can then decide when to operate the self-cleaning turf treatment device 100 in the cleaning mode. In some examples, the manual input sensor 412 can be linked to another manually operated control of the self-cleaning turf treatment device 100. For example, the manual input sensor 412 is configured to actuate when the user operates a lever (not shown) to manually raise the cutting unit 402 or the device body 128 with respect to the surface of the ground 204.

When the controller 400 receives an indication that the manual input sensor 412 has been actuated, the controller 400 preforms the steps in Figure 5 as previously discussed.

In another example, the controller 400 receives a signal from a roller rotation sensor 410. The roller rotation sensor 410 sends a signal to the controller 400 indicating whether the front rolling element 108 or the rear rolling element 110 are moving. The roller rotation sensor 410 can be an optical sensor configured to detect a moving pattern of the front rolling element 108 and / or the rear rolling element 110. The roller rotation sensor 410 can be any other suitable sensor for determining rotation of the front and rear rolling elements 108, 110. In step 504, the controller 400 may determine that a status of the self-cleaning turf treatment device 100 when the controller 400 determines that the front and rear rolling elements 108, 110 have not moved for a period of time. For example, the self-cleaning turf treatment device 100 has been parked by the user and is in a suitable position to perform the cleaning mode. Additionally or alternatively, the controller 400 receives a signal from a drive mechanism 418 coupled to one or both of the front rolling element 108 and the rear rolling element 110. This means that the controller 400 can determine whether the self-cleaning turf treatment device 100 is moving.

In another example, the controller 400 receives a signal from a brush height sensor 406. The brush height sensor 406 is configured to determine the height of the rotatable brush 102 above the surface of the ground 204. The controller 400 may determine in step 504 that the self-cleaning turf treatment device 100 is in a suitable configuration to perform the cleaning mode in response to the signal received from the brush height sensor 406.

For example, the controller 400 may determine in step 504 that the status of the self-cleaning turf treatment device 100 has been changed only when the height of the rotatable brush 102 above the surface of the ground 204 is above a predetermined threshold. The predetermined threshold may be a height at which the rotatable brush 102 cannot physically touch the turf canopy 202. The brush height sensor 406 can be a sensor configured to detect the clearance between the rotatable brush 102 and the surface of the ground 204 e.g. an ultrasonic distance sensor, a laser range finder, an optical sensor, an infrared sensor etc.

In some examples, the brush height sensor 406 is the electromechanical actuator in the height adjustment mechanism 116 e.g. a servo which sends position information of the servo to the controller 400. Similarly the controller 400 can receive position and orientation information from the actuator in the comb adjustment mechanism 118.

In some examples, the controller 400 receives a signal from a location sensor 416. In some examples, the location sensor 416 is a GPS sensor configured to determine the position of the self-cleaning turf treatment device 100. The controller 400 may comprise a map of the local area comprising an indication of areas where the cleaning mode can be performed. An area where the cleaning mode can be performed may be e.g. at the side of a football pitch and not on the football pitch. In step 504 the controller 400 determines the absolute location of the self-cleaning turf treatment device 100 from the GPS signal. The controller 400 then determines whether the self-cleaning turf treatment device 100 is in a suitable location for performing the cleaning mode.

In some examples, the controller 400 may further receive signals from a motion or acceleration sensor 414. The controller 400 may determine that the self-cleaning turf treatment device 100 is travelling on a slope. Indeed, the controller 400 can receive a signal from any other sensor configured to determine a parameter of the self-cleaning turf treatment device 100 or the environment of the self-cleaning turf treatment device 100.

In examples where a plurality of the above-described sensors are present on the turf treatment device, the controller 400 may determine in step 504 to perform the cleaning mode in response to a signal from any one of the plurality of sensors.

In some examples, the controller 400 may receive signals from a plurality of sensors in order to determine in step 504 to perform the cleaning mode. For example, the controller 400 may require a signal from the tilt sensor 408 and the manual input sensor 412 before performing the cleaning mode. This may help prevent accidentally cleaning the turf comb 104 in an unsuitable location.

In another example, two or more examples are combined. Features of one example can be combined with features of other examples.

The invention has been discussed with particular reference to the examples illustrated. However, it will be appreciated that variations and modifications may be made to the examples that fall within the scope of the appended claims.

## Claims

1. A self-cleaning turf treatment device comprising:
a device body having a front side facing a direction of travel of the self-cleaning turf treatment device;
a turf comb mounted to the device body, the turf comb arranged to engage a turf canopy and lift debris from the turf canopy; and
a rotatable brush engageable with the turf comb;
wherein the rotatable brush is configured to
operate in a debris removal mode wherein the rotatable brush rotates in a first direction and propels debris from turf comb in a direction away from the front side; and
operate in a cleaning mode wherein the rotatable brush rotates in a second direction and propels debris lodged in the turf comb in a direction towards the front side.

2. The self-cleaning turf treatment device according to claim 1, wherein the self-cleaning turf treatment device comprises a motor operatively connected to the rotatable brush for driving the rotatable brush in the first direction and the second direction.

3. The self-cleaning turf treatment device according to claim 2, wherein the self-cleaning turf treatment device comprises a controller configured to selectively operate the motor and the rotatable brush between the debris removal mode and the cleaning mode.

4. The self-cleaning turf treatment device according to claim 3, wherein the controller is configured to operate the rotatable brush in the cleaning mode for a predetermined period of time.

5. The self-cleaning turf treatment device according to claim 3 or claim 4, wherein the controller is configured to slow down or stop the motor before switching from the debris removal mode to the cleaning mode and/or vice versa.

6. The self-cleaning turf treatment device according to any one of claims 3 to 5, wherein the controller is configured to select either the debris removal mode or the cleaning mode in dependence of a received signal.

7. The self-cleaning turf treatment device according to claim 6, wherein the turf treatment device comprises one or more sensors configured to detect a status of the self-cleaning turf treatment device and send a signal comprising status information of the turf treatment device to the controller.

8. The self-cleaning turf treatment device according to claim 7, wherein the one or more sensors comprises a tilt sensor mounted on the device body configured to detect an angle of inclination of the turf treatment device with respect to the ground.

9. The self-cleaning turf treatment device according to claim 7 or claim 8, wherein the one or more sensors comprises a user input sensor configured to detect manual input.

10. The self-cleaning turf treatment device according to any one of claims 7 to 9, wherein the one or more sensors comprises a location sensor configured to determine the location of the self-cleaning turf treatment device.

11. The self-cleaning turf treatment device according to any one of claims 7 to 10, wherein the one or more sensors comprises a brush height sensor configured to detect height adjustment of the rotatable brush with respect to the ground.

12. The self-cleaning turf treatment device according to any one of claims 3 to 11, wherein the controller is configured to determine whether the load of the motor is below a predetermined threshold when in the cleaning mode and is further configured to switch the rotatable brush from the cleaning mode to the debris removal mode when the controller determines that the load of the motor is below the predetermined threshold when in the cleaning mode.

13. The self-cleaning turf treatment device according to any one of claims 3 to 12, further comprising a comb adjustment mechanism for adjusting the distance between the turf comb and the rotatable brush; wherein the controller is configured to control the comb adjustment mechanism such that the turf comb and the rotatable brush are closer together during the cleaning mode.

14. The self-cleaning turf treatment device according to any one of claims 3 to 13, further comprising a height adjustment mechanism for adjusting the height of the turf comb and the rotatable brush above the ground; wherein the controller is configured to control the height adjustment mechanism such that the turf comb and the rotatable brush are further away from the ground during the cleaning mode.

15. The self-cleaning turf treatment device according to any one of the preceding claims, wherein the turf treatment device is a pedestrian lawn care apparatus, a riding lawn care apparatus, a robotic lawn care apparatus, or an accessory mountable to a lawn care apparatus.
